# EUROPÄISCHE PATENTSCHRIFT

(11) **EP 0 570 366 B1**
(45) Veröffentlichungstag und Bekanntmachung des Hinweises auf die Patenterteilung: **07.09.1994**
(21) Anmeldenummer: 90917091.2
(22) Anmeldetag: 12.11.1990
(51) Int. Cl.: G02F 1/1337, C08G 69/32

(54) **VERWENDUNG FLUORIERTER AROMATISCHER POLYAMIDE ALS ORIENTIERUNGSSCHICHT FÜR FLÜSSIGKRISTALL-SCHALT- UND -ANZEIGEVORRICHTUNGEN**
USE OF FLUORINATED AROMATIC POLYAMIDES AS THE ORIENTATION LAYER FOR LIQUID CRYSTAL SWITCHING AND DISPLAY DEVICES
EMPLOI DE POLYAMIDES AROMATIQUES FLUORES COMME COUCHE D'ORIENTATION POUR DISPOSITIFS DE COMMUTATION ET D'AFFICHAGE A CRISTAUX LIQUIDES

(30) Priorität: 17.11.1989 DE 3938209
(43) Veröffentlichungstag der Anmeldung: 24.11.1993
(73) Patentinhaber: HOECHST AKTIENGESELLSCHAFT, 65926 Frankfurt am Main (DE)
(72) Erfinder: DÜBAL, Hans-Rolf, D-6240 Königstein (DE); MURAKAMI, Mikio New Town Bldg. 202, Kakegawa-shi Skizuoka-ken (JP); HERRMANN-SCHÖNHERR, Otto, D-6140 Bensheim (DE); SCHNELLER, Arnold, D-6500 Mainz (DE)
(86) Internationale Anmeldenummer: EP9001893
(87) Internationale Veröffentlichungsnummer: WO9108509

(56) Entgegenhaltungen:
- Patent Abstracts of Japan, Vol. 6, No. 92 (P-119)(970), 29 May 1982 & JP, A, 5726827
- Patent Abstracts of Japan, Vol. 7, No. 117 (P-198)(1262), 21 May 1983 & JP, A, 5837261
- Patent Abstracts of Japan, Vol. 13, No. 291 (P-893), 6 July 1989 & JP, A, 1073321

## Beschreibung

### Verwendung fluorierter aromatischer Polyamide als Orientierungsschicht für Flüssigkristall-Schalt- und -Anzeigevorrichtungen

Die Kombination der ungewöhnlichen anisotropen und fluiden Eigenschaften von Flüssigkristallen hat bekanntlich zur Verwendung von flüssigkristallinen Materialien in einer Vielzahl von elektro-optischen Schalt- und Anzeigevorrichtungen (Displays) geführt. Dabei können sowohl die elektrischen, magnetischen und elastischen als auch die thermischen Eigenschaften der Flüssigkristalle zu Orientierungsänderungen ausgenutzt werden.

Optische Effekte lassen sich mit Hilfe der Doppelbrechung ("birefringence mode"), der Einlagerung von Farbstoffen ("guest-host mode") oder der Lichtstreuung erzielen. Zu diesem Zweck wurden bisher sowohl Materialien mit nematischen als auch mit smektischen Flüssigkristallphasen verwendet. Beispiele für solche Schalt- und Anzeigevorrichtungen sind bereits aus zahlreichen Patenschriften und Fachveröffentlichungen bekannt.

Flüssigkristall-Schalt- und Anzeigevorrichtungen weisen u.a. folgende Bestandteile auf: Trägerplatten (z.B. aus Glas oder Kunststoff), beschichtet mit transparenten Elektroden und einer Orientierungsschicht, Abstandshalter, Kleberahmen, Polarisatoren, sowie für Farbdisplays dünne Farbfilterschichten. Weitere mögliche Komponenten sind Antireflex-, Passivierungs-, Ausgleichs- und Sperrschichten sowie elektrische nichtlineare Elemente, wie z.B. Dünnschichttransistoren (TFT) und Metall-Isolator-Metall (MIM)-Elemente. Im Detail ist der Aufbau von Flüssigkristalldisplays bereits in einschlägigen Monographien beschrieben (z.B. E. Kaneko, "Liquid Crystal TV Displays: Principles and Applications of Liquid Crystal Displays", KTK Scientific Publishers, 1987, Seiten 12-30 und 163-172).

Von den obengenannten Bestandteilen kommt der Orientierungsschicht besondere Bedeutung zu. Sie dient bekanntlich dem Zweck, eine gleichmäßige, störungsfreie Ausrichtung der Moleküllängsachsen und damit einen hohen Kontrast zu gewährleisten. Sie kann sowohl aus organischen Polymeren als auch aus anorganischen Schichten bestehen.

Für viele Typen von Flüssigkristalldisplays, insbesondere für sogenannte "supertwist" (STN), "super-birefringence" (SBE), "double-supertwist" (D-STN), "optical mode interference" (OMI) und auch ferroelektrische (FLC) Displays, ist es erforderlich bzw. vorteilhaft, daß zwischen den Moleküllängsachsen und der Oberfläche der Orientierungsschicht ein bestimter Winkel, der sogenannte Oberflächenneigungs- oder "surface-tilt"-Winkel eingestellt wird. Je nach Konstruktionsweise der oben angeführten Displays sind Winkel bis zu 30° erwünscht.

Während bisland zahlreiche Orientierungsschichten beschrieben wurden, die einen sehr kleinen "surface-tilt"-Winkel (0-3°) besitzen, sind nur sehr wenige Materialien bekannt, die zu einem Winkel von 5° und größer führen.

Ein der Fachwelt gut bekanntes Beispiel für eine Orientierungsschicht mit größerem "surface-tilt"-Winkel ist schräg aufgedampftes Siliziummonoxid (SiO), das bekanntlich bei einem Bedampfungswinkel von 7° einen Oberflächenneigungswinkel von 20° ergibt. Jedoch ist der Bedampfungsprozeß für Siliziummonoxid wegen der hohen Kosten und der nur mit großem Aufwand zu erzielenden Homogenität bei großen Flächen nachteilig.

Ein weiteres Beispiel ist die Verwendung von Polyparaphenylen als Orientierungsschicht. Nach einer thermischen Behandlung des Materials bei ca. 450°C lassen sich hierbei hohe Oberflächenneigungswinkel erreichen. Ein großer Nachteil dieses Materials ist jedoch die notwendige Anwendung hoher Temperaturen beim Herstellungsprozeß, die der Verwendung dieser Orientierungsschichten für Farb-LCDs entgegensteht, da sich die Farbstoffe bzw. Pigmente schon oberhalb von 250°C zu zersetzen beginnen.

Die als Orientierungsschichten verwendeten organischen Polymerschichten werden üblicherweise auf die zu beschichtenden Flächen (z.B. Trägerplatten) in Form von Polymerlösungen oder Lösungen löslicher Polymervorstufen durch Druck-, Sprüh-, Tauch- oder Schleuderverfahren aufgetragen und anschließend - im allgemeinen durch Erhitzen des Naßfilms - ausgehärtet. Zur Erzielung einer orientierenden Wirkung wird die erhaltene harte Polymerschicht mit einer samtartig beschichteten oder mit Samt bezogenen Walze, einer Bürste oder ähnlichen Vorrichtungen "gerieben" und dadurch die Polymeroberfläche vorzugsweise richtungsorientiert aufgerauht.

Der vorliegenden Erfindung liegt die Aufgabe zugrunde, geeignete Orientierungsschichten für Flüssigkristall-Schalt- und Anzeigevorrichtungen bereitzustellen, die sich bei relativ niedrigen Temperaturen, d.h. unterhalb von 250°C, aushärten lassen, eine gute Haftfestigkeit auf der Trägerunterlage und hohe Transparenz besitzen, eine besonders gleichmäßige Orientierung sowohl smektischer als auch nematischer Flüssigkristalle ermöglichen und darüberhinaus einen hohen Oberflächenneigungswinkel besitzen.

Eine Lösung dieser Aufgabe ergibt sich durch die Verwendung der nachfolgend beschriebenen aromatischen Polyamide als Orientierungsschicht für Flüssigkristalldisplays.

Diese aromatischen Polyamide erzeugen bei Prozeßtemperaturen unterhalb von 250°C dann Oberflächentiltwinkel von mehr als 5°, wenn sie an mindestens einem aromatischen Kern perfluorierte Alkylgruppen tragen.

Die Erfindung betrifft daher die Verwendung von aromatischen Polyamiden als Orientierungsschicht in Flüssigkristall-Schalt- und -Anzeigeelementen, wobei die Polyamide Struktureinheiten der Formel I 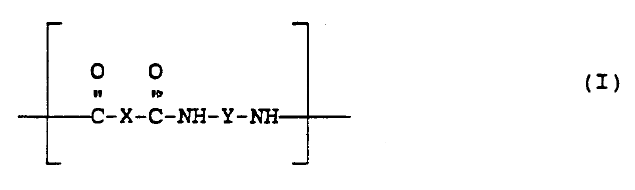
enthalten. Die Symbole in Formel (I) haben die folgende Bedeutungen: 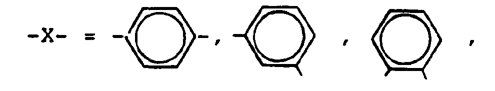 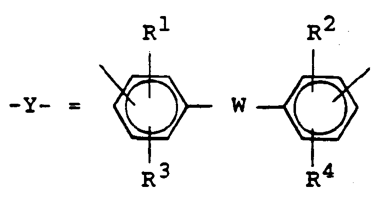
wobei R¹ und R² gleich oder verschieden sind und für perfluoriertes Alkyl mit 1 bis 4 C-Atomen stehen, R³ und R⁴ gleich oder verschieden sind und für H oder CF₃ stehen und wobei -W- für -O-, -C(CH₃)₂-, -C(CF₃)₂-, -SO₂-, -CO-, -CH₂-, eine Einfachbindung oder den Rest 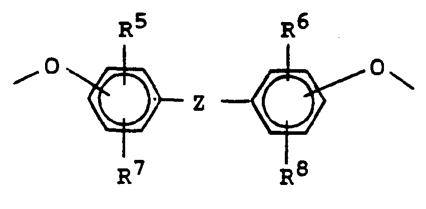
steht, wobei R⁵, R⁶, R⁷ und R⁸ gleich oder verschieden sind und CH₃, CF₃, OCH₃, F, Cl, Br oder H bedeuten, und -Z- für -C(CH₃)₂-, -C(CF₃)₂-, -SO₂-, -CO-, -CH₂- oder -O- steht.

Die Gruppe -X- kann darüber hinaus auch eine Vielzahl anderer bivalenter Radikale bedeuten, da als Dicarbonsäure-Komponente auch beispielsweise 1,4-Cyclohexan-dicarbonsäure oder Pyridin-dicarbonsäuren eingesetzt werden können, es ist jedoch aus wirtschaftlichen Gründen vorteilhaft, die obengenannten Gruppen (ortho-, meta-, para-Phenylen) zu verwenden.

Bevorzugt wird die Verwendung von solchen substituierten aromatischen Polyamiden, die aus gleichen oder verschiedenen Struktureinheiten der Formel (I) bestehen und bei denen das Symbol Y in Formel (I) folgende Bedeutung trägt: 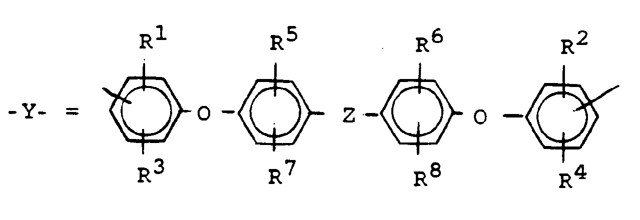
wobei
- R¹, R²: = CF₃,
- R³, R⁴: = H oder CF₃,
- R⁵, R⁶, R⁷, R⁸: = H, CH₃, oder CF₃ und
- Z: = -C(CH₃)₂-, -C(CF₃)₂-, -O-, oder -CO-

bedeuten.

Besonders bevorzugt werden substituierte aromatische Polyamide verwendet, die aus Struktureinheiten der Formel (I) bestehen und in denen dem Symbol Y in Formel (I) folgende Bedeutung zukommt: 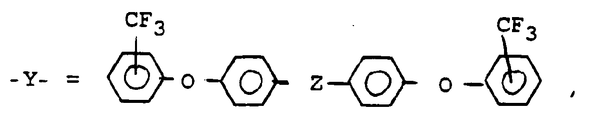
wobei Z = -C(CH₃)₂₋, -C(CF₃)₂- oder -O- bedeutet.

Ebenfalls bevorzugt werden solche Polyamide verwendet, die aus mindestens zwei verschiedenen Struktureinheiten der allgemeinen Formel (I) aufgebaut sind.

Die erfindungsgemäßen Polyamide sollen vorzugsweise zum einen löslich in N-Methylpyrrolidon oder ähnlichen Lösungsmitteln sein, und zum anderen aber in den flüssigkristallinen Phasen schwerlöslich sein.

Die Löslichkeit der Polyamide wird durch ihre Molmasse bestimmt, welche durch die Grenzviskosität (η) charakterisiert wird. Die Grenzviskosität der erfindungsgemäßen Polyamide beträgt 0,3 bis 1,5 dl/g. Besonders geeignet sind solche der oben beschriebenen aromatischen Polyamide, die eine Grenzviskosität von 0,4 bis 1,0 dl/g aufweisen (jeweils gemessen in NMP bei einer Temperatur von 25°C).

Die oben beschriebenen aromatischen Polyamide sind wertvolle Materialien für Flüssigkristall-Schalt- und -Anzeigevorrichtungen (LC-Displays).

Die erfindungsgemäßen LC-Displays enthalten neben den üblichen, bereits genannten Komponenten wie (zwei) Trägerplatten, (zwei) Elektroden und dem flüssigkristallinen Medium (z. B. nematische oder smektische Phase) mindestens eine Orientierungsschicht aus einem aromatischen Polyamid wie oben beschrieben.

Die Erfindung wird durch die nachfolgenden Beispiele näher erläutert:

### Beispiel 1: Herstellung eines Polyamides aus folgenden Struktureinheiten

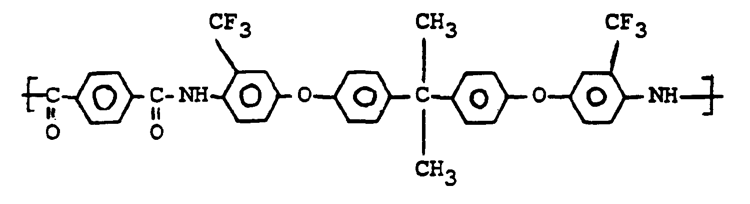

Als Ausgangskomponenten dienen das literaturbekannte Diamin 1 und Terephthalsäuredichlorid (Säurechlorid 1)

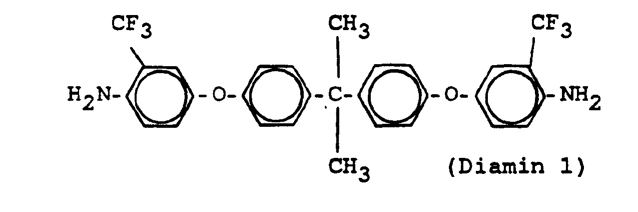

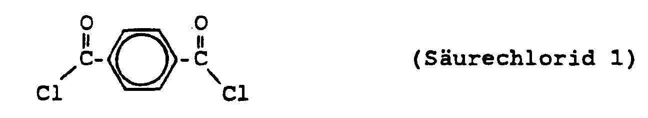

In einer Rührapparatur werden 109,3 g Diamin 1 in 1100 g trockenem N-Methylpyrrolidon (NMP) gelöst und anschließend der Lösung unter Rühren innerhalb einer Stunde bei gleichzeitigem Aufheizen von 15°C auf 70°C 40,6 g Säurechlorid 1 zudosiert. Die resultierende klare Lösung wird bei 70°C noch 1 Stunde gerührt. Vorzugsweise werden die Polykondensationsreaktionen erfindungsgemäß mit geringem Diamin-Überschuß durchgeführt und nach Beendigung der Umsetzung durch Zusatz einer geringen Menge Benzoylchlorid abgestoppt, so daß das resultierende Polymer vorzugsweise aus linearmakromolekularen Polykondensationspolyamiden besteht, die an beiden Molekülenden benzoylierte Aminoendgruppen aufweisen. Durch Zugabe von 25 g CaO wird das Reaktionsgemisch anschließend neutralisiert und nochmals 1 Stunde gerührt.

Die filtrierte Reaktionslösung wird unter Wasserzugabe koaguliert, das ausgefallene Polymerisat mehrmals mit Wasser und Aceton gewaschen, anschließend unter Vakuum (ca. 50 mbar) und schwachem Stickstoffstrom bei einer Temperatur von 180°C bis zur Gewichtskonstanz getrocknet.

Mittels DSC-Messungen (differentialkalorimetrische Messungen) wurde für das erhaltene Polyamid eine Glastemperatur (T_{G}) von 175°C ermittelt. Die Grenzviskosität [h] des Polyamids beträgt 1,0 dl/g, gemessen in NMP bei einer Temperatur von 25°C.

### Beispiel 2: Bau einer Testzelle und Messung des Oberflächenneigungswinkels für das Polymer aus Beispiel 1

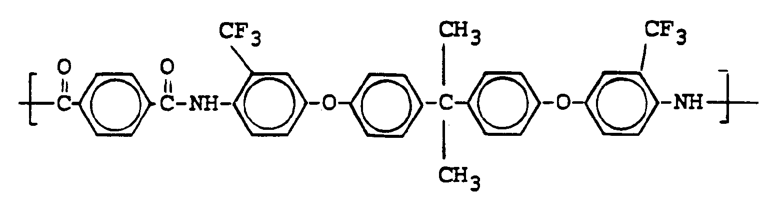

Zwei mit ITO (Indium-Zinn-Oxid) als leitfähigtransparentem Material beschichtete Glasträger werden gereinigt (15 min. im Ultraschallbad mit einer "Extran APM"-Lösung (Hersteller: Firma E. Merck, Darmstadt) in entionisiertem Wasser, danach weitere Reinigung mit entionisiertem Wasser und Isopropanol mit anschließender Trocknung) und anschließend mit einem Naßfilm bestehend aus dem Polymer aus Beispiel 1 (3 Gew.%) und N-Methylpyrrolidon (97 Gew.%) beschichtet (Spin-coater 30 Sekunden bei 6000 U/min). Der Naßfilm wird anschließend bei einer Temperatur von von 210°C 60 Minuten lang gehärtet, so daß das Lösemittel vollständig verdampft ist.

Die so behandelten Substrate weisen einen trockenen, harten Polymerfilm von 70 nm Schichtdicke auf. Die Substrate werden anschließend mit einer mit Samt bespannten Reibemaschine gerieben (Rotationsgeschwindigkeit der Walze 300 U/min.), gespült (Isopropanol und Dichlormethan) und danach unter Verwendung von Abstandhaltern im Abstand von 9 µm planparallel mit antiparalleler Reiberichtung verklebt.

Die so hergestellten Meßzellen werden sodann mit einer nematischen Breitbereichsmischung ("ZLI 1565" der Firma E. Merck, Darmstadt) gefüllt und wie folgt zur Messung des Oberflächenneigungswinkels verwendet.

Zur Messung des Oberflächenneigungswinkels wird zunächst die Kapazität Cₒ der Zelle bestimmt. Die Zelle wird in ein Magnetfeld von ca. 10 KGauß gebracht wobei die oben genannten Glasplatten zunächst parallel zum Magnetfeld stehen. Sodann wird die Zelle gedreht und ihre Kapazität in Abhängigkeit des Drehwinkels bestimmt.

Der Winkel, bei dem gerade wieder die Kapazität Cₒ erreicht wird, entspricht dem Oberflächenneigungswinkel.

Für das Polymer aus Beispiel 1 erhält man einen Winkel von 9°.

### Beispiel 3: Vergleich des Polyamids mit anderen Polymeren

Der Oberflächenneigungswinkel des Polymers aus Beispiel 1 wird dem Oberflächenneigungswinkel anderer Polymere gegenübergestellt. Dazu werden - wie unter Beispiel 2 beschrieben - ebenfalls mit anderen Polymeren beschichteten Testzellen hergestellt.

Es werden unter anderem Polymere bestehend aus folgenden Wiederholeinheiten in Testzellen untersucht:
A

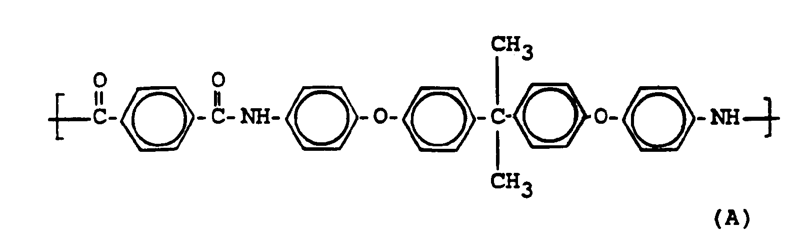

Dieses Polymer unterscheidet sich von dem erfindungsgemäßen Polymer aus Beispiel 1 nur durch den Ersatz beider CF₃-Gruppen durch H-Atome.
B

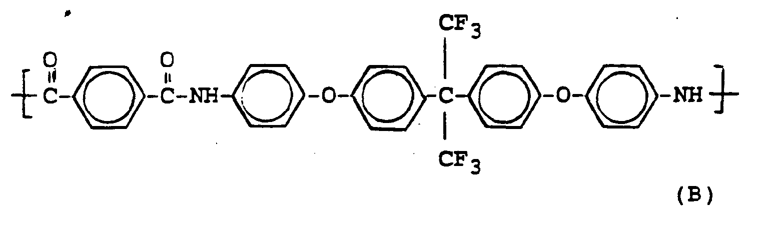

Bei diesem Polymex sind die CF₃-Gruppen an den inneren Alkylteil der Diaminokomponente gebunden. Das Polymer (B) ist bereits in JP 58-37621 als Orientierungsschicht für Flüssigkristallanzeigevorrichtungen vorbeschrieben.

Die Polymere (A) und (B) lassen sich analog zu Beispiel 1 herstellen.

Ein Vergleich der Oberflächenneigungswinkel der Polymere ergibt folgende Ergebnisse:
- Polymer aus Beispiel 1: 9°
- Polymer (A): 2°
- Polymer (B): 4°

### Beispiel 4: Ferroelektrische LCD-Zelle

Es wird, wie im Beispiel 2 beschrieben, eine Zelle hergestellt, die jedoch einen Elektrodenabstand von 2,4 µm sowie parallele Reiberichtung aufweist. Als Orientierungsschicht wird das Polymer aus Beispiel 1 verwendet.
Die Zelle wird mit einer handelsüblichen ferroelektrischen Flüssigkristalltestmischung gefüllt. Es kann nun beobachtet werden, daß die auf gewöhnlichen Oberflächen (mit kleinem Oberflächenneigungswinkel) stets auftretenden störenden Zig-Zag Versetzungslinien, die den Kontrast verringern, nicht mehr auftreten.
Der hohe Oberflächenneigungswinkel bewirkt die energetische Bevorzugung einer Chevron - Richtung, so daß man eine FLC-Probe mit monokristalliner Ordnung statt mit polykristalliner Ordnung erhält.
Hierbei zeigt sich klar, daß der hohe Oberflächenneigunswinkel der Polymere auch in FLC-Displays auftritt und vorteilhaft zur Kontrastverbesserung ausgenutzt werden kann.

### Beispiel 5:

Gemäß der Vorschrift aus Beispiel 1 wird ein Polyamid bestehend aus den Struktureinheiten 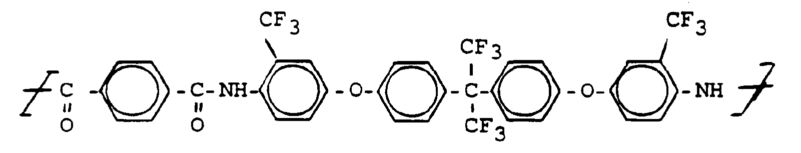
ausgehend vom Diamin 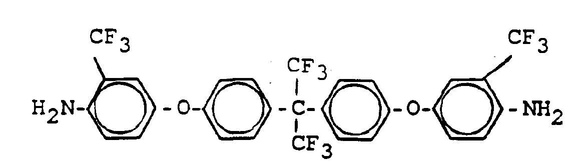
und dem Säurechlorid 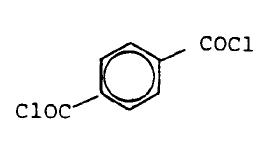
hergestellt.

Mit den unter Beispiel 2 beschriebenen Verfahren wurden Testzellen gebaut und für eine nematische Flüssigkristallmischung ("ZLi 1565", E. Merck, Darmstadt) der Oberflächenneigungswinkel zu 3,3° bestimmt.

## Patentansprüche

1. Verwendung von fluorierten aromatischen Polyamiden als Orientierungsschicht in Flüssigkristall-Schalt- und -Anzeigeelementen, wobei die Polyamide Struktureinheiten der Formel I 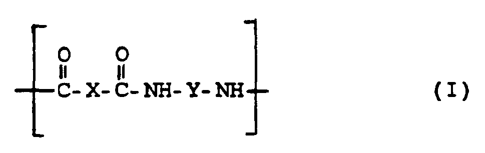 enthalten, wobei in Formel I die Symbole folgende Bedeutung haben: 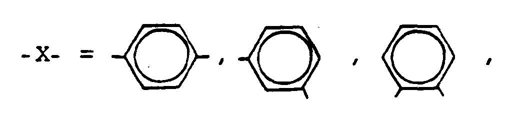 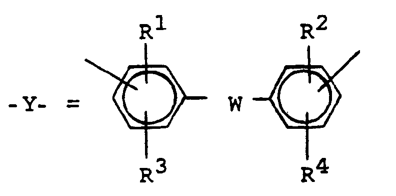 wobei R¹ und R² gleich oder verschieden sind und für perfluoriertes Alkyl mit 1 bis 4 C-Atomen stehen, R³ und R⁴ gleich oder verschieden sind und für H oder CF₃ stehen und wobei -W- für -O-, -C(CH₃)₂-, -C(CF₃)₂-, -SO₂-, -CO-, -CH₂-, eine Einfachbindung oder den Rest 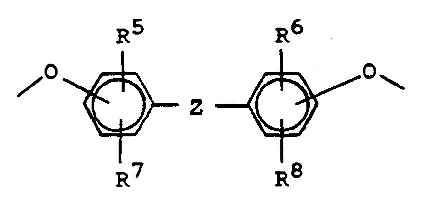 steht, wobei R⁵, R⁶, R⁷ und R⁸ gleich oder verschieden sind und CH₃, CF₃, OCH₃, F, Cl, Br oder H bedeuten, und -Z- für -C(CH₃)₂-, -C(CF₃)₂-, -SO₂-, -CO-, -CH₂- oder -O- steht.

2. Verwendung von fluorierten aromatischen Polyamiden gemäß Anspruch 1, wobei die Polyamide aus gleichen oder verschiedenen Struktureinheiten der Formel (I) bestehen und das Symbol Y in Formel (I) folgende Bedeutung trägt: 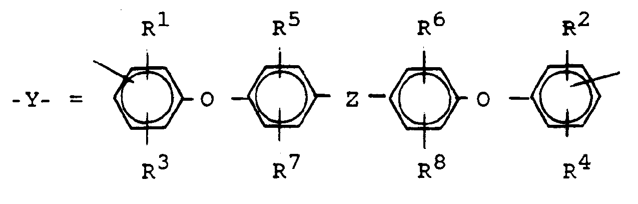 wobei
R¹, R² = CF₃,
R³, R⁴ = H oder CF₃,
R⁵, R⁶, R⁷, R⁸ = H, CH₃, CF₃ und
Z = -C(CH₃)₂-, -C(CF₃)₂-, -O-, -CO-
bedeuten.

3. Verwendung von fluorierten aromatischen Polyamiden gemäß Anspruch 1, wobei die Polyamide aus Struktureinheiten der Formel (I) bestehen und das Symbol Y in Formel (I) folgende Bedeutung trägt: 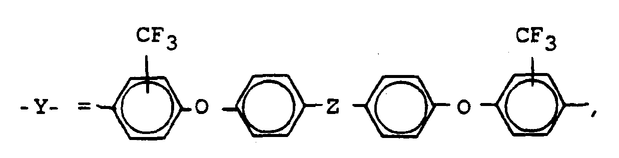 wobei Z = -C(CH₃)₂-, -C(CF₃)₂- oder -O- bedeutet.

4. Verwendung von fluorierten aromatischen Polyamiden gemäß Anspruch 1, wobei die Polyamide aus mindestens zwei verschiedenen Struktureinheiten der allgemeinen Formel (I) aufgebaut sind.

5. Verwendung von fluorierten aromatischen Polyamiden gemäß Anspruch 2, wobei die Polyamide aus mindestens zwei verschiedenen Struktureinheiten der allgemeinen Formel (I) aufgebaut sind.

6. Verwendung von fluorierten aromatischen Polyamiden gemäß Anspruch 3, wobei die Polyamide aus mindestens zwei verschiedenen Struktureinheiten der allgemeinen Formel (I) aufgebaut sind.

7. Flüssigkristall-Schalt- und -Anzeigevorrichtung enthaltend ein flüssigkristallines Medium, zwei Elektroden, zwei Trägerplatten sowie mindestens eine Orientierungsschicht, dadurch gekennzeichnet, daß diese Orientierungsschicht aus einem Polyamid gemäß Anspruch 1 besteht.

8. Flüssigkristall-Schalt- und -Anzeigevorrichtung enthaltend ein flüssigkristallines Medium, zwei Elektroden, zwei Trägerplatten sowie mindestens eine Orientierungsschicht, dadurch gekennzeichnet, daß diese Orientierungsschicht aus einem Polyamid gemäß Anspruch 2 besteht.

9. Flüssigkristall-Schalt- und -Anzeigevorrichtung enthaltend ein flüssigkristallines Medium, zwei Elektroden, zwei Trägerplatten sowie mindestens eine Orientierungsschicht, dadurch gekennzeichnet, daß diese Orientierungsschicht aus einem Polyamid gemäß Anspruch 3 besteht.

10. Flüssigkristall-Schalt- und -Anzeigevorrichtung enthaltend ein flüssigkristallines Medium, zwei Elektroden, zwei Trägerplatten sowie mindestens eine Orientierungsschicht, dadurch gekennzeichnet, daß diese Orientierungsschicht aus einem Polyamid gemäß Anspruch 4 besteht.

## Claims

1. Use of a fluorinated aromatic polyamide as orientation layer in liquid crystal switching and display elements, which polyamide contains structural units of the formula I 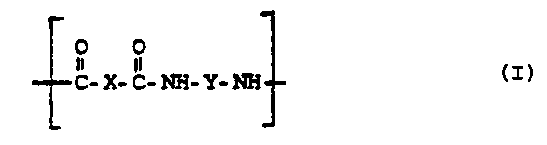 the symbols in formula I having the following meaning: 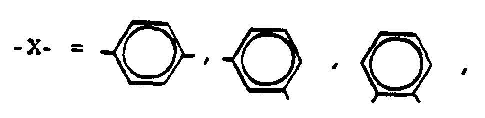 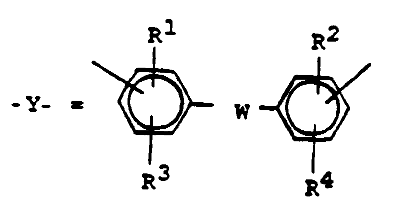 in which R¹ and R² are identical or different and are perfluorinated alkyl having 1 to 4 carbon atoms, R³ and R⁴ are identical or different and are H or CF₃, and in which -W- is -O-, -C(CH₃)₂- -C(CF₃)₂-, -SO₂, -CO-, -CH₂-, a single bond or the radical 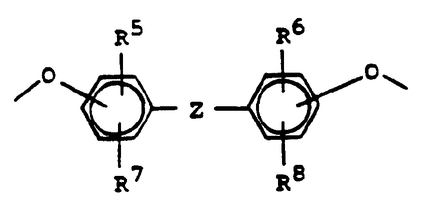 in which R⁵, R⁶, R⁷ and R⁸ are identical or different and are CH₃, CF₃, OCH₃, F, Cl, Br or H, and -Z- is -C(CH₃)₂- -C(CF₃)₂- -SO₂-, -CO-, -CH₂- or -O-.

2. Use of a fluorinated aromatic polyamide as claimed in claim 1, which polyamide is composed of identical or different structural units of the formula (I) and the symbol Y in formula (I) has the following meaning:
-Y- is 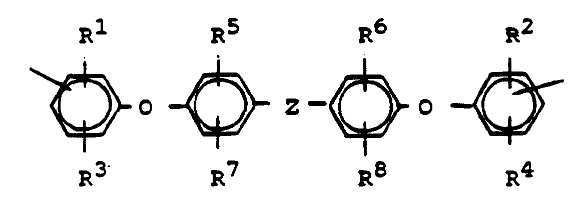 in which
R¹, R² = CF₃,
R³, R⁴ = H or CF₃,
R⁵, R⁶, R⁷, R⁸ = H, CH₃, CF₃ and
Z = -C(CH₃)₂-, -C(CF₃)₂-, -O-, -CO-.

3. Use of a fluorinated aromatic polyamide as claimed in claim 1, which polyamide is composed of structural units of the formula (I) and the symbol Y in formual (I) has the following meaning:
-Y- is 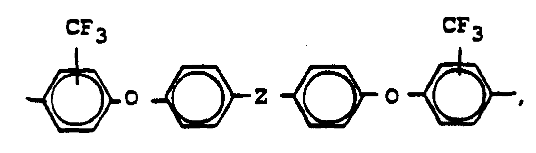 in which Z = -C(CH₃)₂-, -C(CF₃)₂- or -O-.

4. Use of a fluorinated aromatic polyamide as claimed in claim 1, which polyamide is composed of at least two different structural units of the formula (I).

5. Use of a fluorinated aromatic polyamide as claimed in claim 2, which polyamide is composed of at least two different structural units of the formula (I).

6. Use of a fluorinated aromatic polyamide as claimed in claim 3, which polyamide is composed of at least two different structural units of the formula (I).

7. A liquid crystal switching and display device, which contains a liquid-crystalline medium, two electrodes, two support plates and at least one orientation layer, wherein this orientation layer comprises a polyamide as claimed in claim 1.

8. A liquid crystal switching and display device, which contains a liquid-crystalline medium, two electrodes, two support plates and at least one orientation layer, wherein this orientation layer comprises a polyamide as claimed in claim 2.

9. A liquid crystal switching and display device, which contains a liquid-crystalline medium, two electrodes, two support plates, and at least one orientation layer, wherein this orientation layer comprises a polyamide as claimed in claim 3.

10. A liquid crystal switching and display device, which contains a liquid-crystalline medium, two electrodes, two support plates, and at least one orientation layer, wherein this orientation layer comprises a polyamide as claimed in claim 4.

## Revendications

1. Emploi de polyamides aromatiques fluorés comme couche d'orientation dans des éléments de couplage ou distribution et d'affichage à cristaux liquides, polyamides qui comprennent les motifs structuraux de formule I ci-dessous 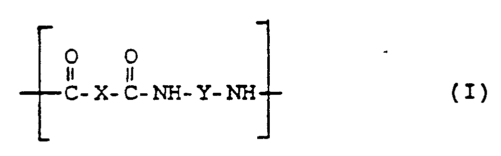 dans laquelle les symboles ont les significations suivantes : 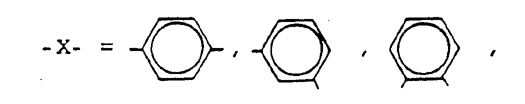 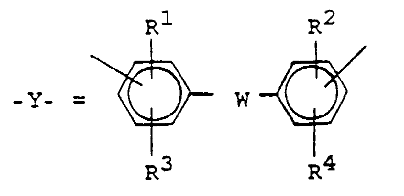 R¹ et R², qui peuvent être identiques ou différents l'un de l'autre, étant des alkyles perfluorés avec de 1 à 4 atomes de carbone, R³ et R⁴, également identiques ou différents, l'hydrogène ou le groupe CF₃, et -W- désignant -O-, -C(CH₃)₂-, C(CF₃)₂-, -SO₂-, -CO-, -CH₂-, une liaison simple ou encore un radical 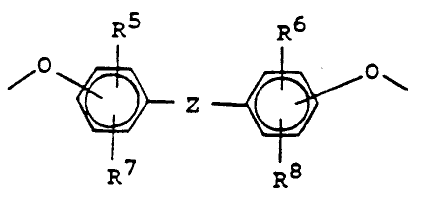 dans lequel R⁵, R⁶, R⁷ et R⁸, identiques ou différents les uns des autres, représentent chacun CH₃, CF₃, OCH₃, F, Cl, Br ou H, et
-Z- représente -C(CH₃)₂-, -C(CF₃)₂-, -SO₂-, -CO-, -CH₂- ou -O-.

2. L'emploi de polyamides aromatiques fluorés selon la revendication 1, les polyamides étant formés de motifs structuraux de formule I identiques ou différents et le symbole Y de la formule I désigne : 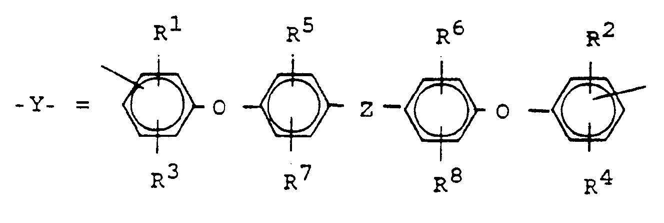 radical dans lequel :
R¹, R² = CF₃
R³, R⁴ = H ou CF₃,
R⁵, R⁶, R⁷, R⁸ = H, CH₃ ou CF₃ et
Z = -C(CH₃)₂-, -(CF₃)₂-, -O- ou -CO-.

3. L'emploi de polyamides aromatiques fluorés selon la revendication 1, les polyamides étant formés de motifs structuraux de formule I et le symbole Y de la formule I désigne : 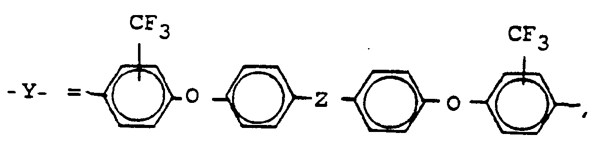 radical dans lequel
Z = -C(CH₃)₂-, -C(CF₃)₂ ou -O-.

4. L'emploi de polyamides aromatiques fluorés selon la revendication 1, les polyamides étant formés d'au moins deux motifs structuraux différents de formule I.

5. L'emploi de polyamides aromatiques fluorés selon la revendication 2, les polyamides étant formés d'au moins deux motifs structuraux différents de formule 1.

6. L'emploi de polyamides aromatiques fluorés selon la revendication 3, les polyamides étant formés de d'au moins deux motifs structuraux différents de formule I.

7. Dispositif de couplage ou distribution et d'affichage à cristaux liquides comprenant un milieu de cristaux liquides avec deux électrodes, deux plaques de support et une ou plusieurs couches d'orientation, dispositif caractérisé en ce que la ou les couches d'orientation sont formées d'un polyamide selon la revendication 1.

8. Dispositif de couplage ou distribution et d'affichage à cristaux liquides comprenant un milieu de cristaux liquides avec deux électrodes, deux plaques de support et une ou plusieurs couches d'orientation, dispositif caractérisé en ce que la ou les couches d'orientation sont formées d'un polyamide selon la revendication 2.

9. Dispositif de couplage ou distribution et d'affichage à cristaux liquides comprenant un milieu de cristaux liquide avec deux électrodes, deux plaques de support et une ou plusieurs couches d'orientation, dispositif caractérisé en ce que la ou les couches d'orientation sont formées d'un polyamides selon la revendication 3.

10. Dispositif de couplage ou distribution et d'affichage à cristaux liquides comprenant un milieu de cristaux liquides avec deux électrodes, deux plaques de support et une ou plusieurs couches d'orientation, dispositif caractérisé en ce que la ou les couches d'orientation sont formées d'un polyamide selon la revendication 4.
